(19) Europäisches Patentamt / European Patent Office / Office européen des brevets

(11) **EP 1 150 109 B1**

(12) **EUROPEAN PATENT SPECIFICATION**

(45) Date of publication and mention
of the grant of the patent:
**18.02.2015 Bulletin 2015/08**

(51) Int Cl.:
**G01L 1/24** *(2006.01)*     **G01L 5/00** *(2006.01)*

(21) Application number: **01106132.2**

(22) Date of filing: **13.03.2001**

(54) **Apparatus and method for measuring residual stress and photoelastic effect of optical fiber**

Vorrichtung und Verfahren zur Messung des Reststresses und fotoelastischeffektes von optischen fasern

Dispositif et méthode pour mesurer le stress résiduel et l'effet photoélastique de fibres optiques

(84) Designated Contracting States:
**DE FR GB**

(30) Priority: **13.03.2000 KR 2000012395**

(43) Date of publication of application:
**31.10.2001 Bulletin 2001/44**

(73) Proprietor: **Samsung Electronics Co., Ltd.
Suwon-si, Gyeonggi-do, 443-742 (KR)**

(72) Inventors:
• **Kim, Dug-Young
Kwangjukwangyok-shi (KR)**
• **Park, Yong-Woo
Samsung Electronics Co., Ltd.
Sungnam-Shi, Kyunggi-Do, (KR)**
• **Paek, Un-Chul
Kwangjukwangyok-shi (KR)**
• **Do, Mun-Hyun
c/o Samsung Electronics Co., Ltd.
Sungnam-Shi, Kyunggi-Do, (KR)**

(74) Representative: **Grünecker, Kinkeldey,
Stockmair & Schwanhäusser
Leopoldstrasse 4
80802 München (DE)**

(56) References cited:
**EP-A- 0 190 922     US-A- 3 440 430
US-A- 4 171 908     US-A- 4 648 274
US-A- 5 400 131     US-A- 5 410 917
US-B1- 6 175 416**

• **ROSE TH ET AL: "FAST PHOTOELASTIC STRESS DETERMINATION: APPLICATION TO MONOMODE FIBRES AND SPLICES" MEASUREMENT SCIENCE AND TECHNOLOGY, IOP PUBLISHING, BRISTOL, GB, vol. 4, no. 3, 1 March 1993 (1993-03-01), pages 431-434, XP000349022 ISSN: 0957-0233**

EP 1 150 109 B1

## Description

The present invention generally relates to an optical fiber or an optical preform, and in particular, to an apparatus and a method for measuring a residual stress and a photoelastic effect of the optical fiber.

A stress generated in a process of manufacturing the optical fiber is left on an optical fiber even though the process completely done. The stress is called as a residual stress. A measuring device of the residual stresses is very important to manufacture a high-quality optical fiber in addition to the development of a specific optical fiber and the study of the characteristic of the optical fiber.

The residual stress generated in a drawing process of the optical fiber at high temperature, i.e., the process of manufacturing the optical fiber, increases the optical losses by a light diffusion of the optical fiber, and causes a refractive index variation by a photoelastic effect. Hence, to manufacture the high-quality optical fiber, a manufacturing technology of the optical fiber having a feature of suppressing the residual stress should be developed in the field. For the development of the technology, it is essentially required to develop the measuring devices for measuring the minute residual stresses of the optical fiber.

Nowadays, a long-period fiber grating is being developed as a method to eliminate partially the residual stresses by periods. To study a spectrum penetrability of the element and to improve the properties of the element, it is required to measure an elimination distribution of the periodical residual stress in a longitudinal direction of the optical fiber, and a refractive index variation effect by the variation of the residual stress. Besides, it is required to study deeply the refractive index variation by the residual stresses, i.e., a variation depending on a doping material variation of the photoelastic effect and a non-linear phenomenon. To achieve the above objections, it is required to develop a measuring apparatus which is able to measure and observe the effect of the residual stress and the photoelastic effect three-dimensionally.

The residual stress of the optical fiber or the optical preform is measured by using the photoelastic effect which is the refractive index variation phenomenon of a medium in accordance with an direction of a stress remained on the medium. Because of the photoelastic effect, the optical fiber or the optical preform has a characteristic of the variation depending on the polarized direction of the light.

When two lights of orthogonal polarized components penetrate the opical fiber or the optical preform at right angle with an axis of the optical fiber or the optical preform, photoelastic effect occurred by the residual stress causes a phase difference of the penetrated light depending on to the polarized direction of the light. A magnitude of the residual stress can be measured by measuring the occurred phase difference using a polariscope. Such existing methods for measuring the residual stress over the optical fiber and the optical preform respectively are disclosed in following documents.

One example of the method is disclosed in a thesis paper "Measurement of stresses in optical fiber and preform, Appl. Opt. 1982, 21, pp. 4241-4245" by P. L. Chu and T. Whitebread. In the paper, a concrete method and a theory for measuring optically the residual stress of the optical fiber by using the photoelastic effect are suggested, and P. L. Chu and T. Whitebread measured the residual stress profile over the optical fiber and the optical preform.

A thesis paper of J. R. Kropp, "Fast photoelastic stress determination application to monomode fiber and splices, Meas. Sci. Technol. 4, 431-434, 1993" is another example. The paper discloses an optic measuring apparatus using the photoelastic effect to observe the residual stress of the monomode fiber and a stress generated in a process of a fusion splice of the fiber.

The other example is a thesis paper of K. W. Raine, "A microscope for measuring axial stresses profile in optical fibres with high spatial resolution and low noise, 4th Optical Fibre Measurement Conference(NPL Teddington UK), 269, 1997". The Paper discloses an apparatus for measuring the residual stress of the optical fiber, which is speedy and excellent in resolving by applying a charge coupled device(CCD) array and a half-shading method to the existing methods using the photoelastic effect.

In general, the method for measuring the residual stress is to analogize the residual stress of the optical fiber by measuring the residual stress of the optical preform having a large cross section (4 cm in diameter) relatively more than that of the optical fiber. However, there is a disadvantage that a mechanical residual stress the optical preform possesses only a thermal residual stress. Hence, measuring with the optical fiber itself is preferable, but the high resolution and micro-close measurement are required considering the size of the optical fiber(cladding diameter = 120 $\mu$m, core diameter = 8 $\mu$m).

However, the method in the related art has various technical defections like relatively small phase differences than the optical preform, difficulties in magnifying an image, and errors of the image by the light intensity of the image background, and so on.

In the case of measuring the residual stress of the optical preform, the phase difference of the polarized light is expected to be equal to or less than 180°, since an optical path length of two orthogonal lights is long. However, the optical path length of the optical fiber is just about 1/100 of the optical preform, so the phase difference of the optical fiber is estimated to equal to or less than 2°. Accordingly, it requires a measuring device having the resolution of at least 0.1°.

The diameter of the optical fiber is generally 125 $\mu$m and the image is manufactured by magnifying the diameter. But the method has a problem that an object lens is not easily attached closely to the optical fiber due to a one-quarter waveplate and a rotation unit of a polarization analyzer in the optical preform residual stress measurement.

Further, there is a phenomenon in the related art that both the optical fiber and a background of the optical fiber are modulated since the periodical variation phenomenon of the penetrated light while a rotating analyzer is being rotated. Consequently, the modulation leaves a difficulty to find the exact image of the optical fiber, and causes a distortion of the image by a diffusion of light around an optical detector.

It is, therefore, the object of the present invention to provide an apparatus and a method as defined in claims 1 and 9 for measuring a residual stress and a photoelastic effect of an optical fiber, which can measures precisely a distribution of three dimensional residual stress in a longitudinal direction in order to improve a manufacture of an optical fiber and to develop a specific optical fiber.

According to an aspect of the present invention, there is provided an apparatus and a method for measuring a residual stress and a photoelastic effect of an optical fiber, which can measures a light intensity variation penetrated the optical fiber by gradually increasing a strain over the optical fiber with a fixed polariscope.

To achieve the above object, there is provided an apparatus for measuring the residual stress and a photoelastic effect of the optical fiber, the apparatus comprising: a light source; a rotary type optical diffuser distanced from the light source in a predetermined distance for suppressing a spatial coherence of a light radiated in the light source; an optical condenser for condensing the radiated light passed through said optical diffuser into a spot where the optical fiber is located; a polariscope for polarizing the light passed through said optical condenser to a linear polarized light at a 45° leaned from an axis of the optical fiber; a polarization analyzer installed in 90° angle with said polariscope and attached closely with the optical fiber, so as for a background image of the optical fiber not to penetrate; an optical fiber strain unit including a strain sensor for straining the optical fiber on said polarization analyzer toward a longitudinal direction and measuring the strain; an object lens for magnifying an image of the light penetrated through the optical fiber; and a charge coupled device(CCD) array for measuring a penetration variation of the optical fiber caused from the strain by said optical fiber strain unit over the optical fiber depending on each spots of the optical fiber diameter.

The above object, features and advantages of the present invention will become more apparent from the following detailed description when taken in conjunction with the accompanying drawing in which:

FIG. 1 is a disassembled perspective view for an apparatus for measuring a residual stress and a photoelastic effect of an optical fiber according to an embodiment of the present invention; and

FIG. 2 is a cross sectional view illustrating a state of the optical fiber installed between a glass cover and a polarization analyzer for measuring a strain of the optical fiber according to an embodiment of the present invention.

A preferred embodiment of the present invention will be described herein below with reference to the accompanying drawings. In the following description, well-known functions or constructions are not described in detail since they would obscure the invention in unnecessary detail.

In the present invention, a polariscope is not rotated like the related art, but fixed for measuring an intensity variation of the penetrated light with gradually increasing a strain over an optical fiber.

If the strain over the optical fiber is increased, a phase value of the penetrated light is linearly increased by a photoelastic effect, so that the light's intensity measured by passing through the polariscope periodically has a shape of a sine function. That is, the phase variation by the residual stress of the optical fiber by nature is to be obtained by measuring the phase of the sine function. Accordingly, the technical problems of the related art can be considerably solved by using the method, so as to improve a resolution of the residual stress, maximize an image magnification, and eliminate the light intensity of a background. In addition, the photoelastic effect of the optical fiber can be measured simply and exactly.

The residual stress of the optical fiber generally have a size of several Mpa. Such magnitude of the residual stress corresponds to a stress and a strain occurred by increasing 0.005 newton over the optical fiber having 125 $\mu$m in diameter, and to a force of restitution when the optical fiber is strained in 0.5$\mu$m. The phase variation derived from the photoelastic effect of the optical fiber by straining the optical fiber in 0.5 $\mu$m and the light intensity variation of the penetrated light thereof corresponds to the light intensity variation occurred by moving the related polarization analyzer at 0.01°. However, the present invention has a great advantage in measuring method more than the related art since the straining of the optical fiber at bout 0.5 $\mu$m using a step motor is much easier than moving the polarization analyzer at 0.01°.

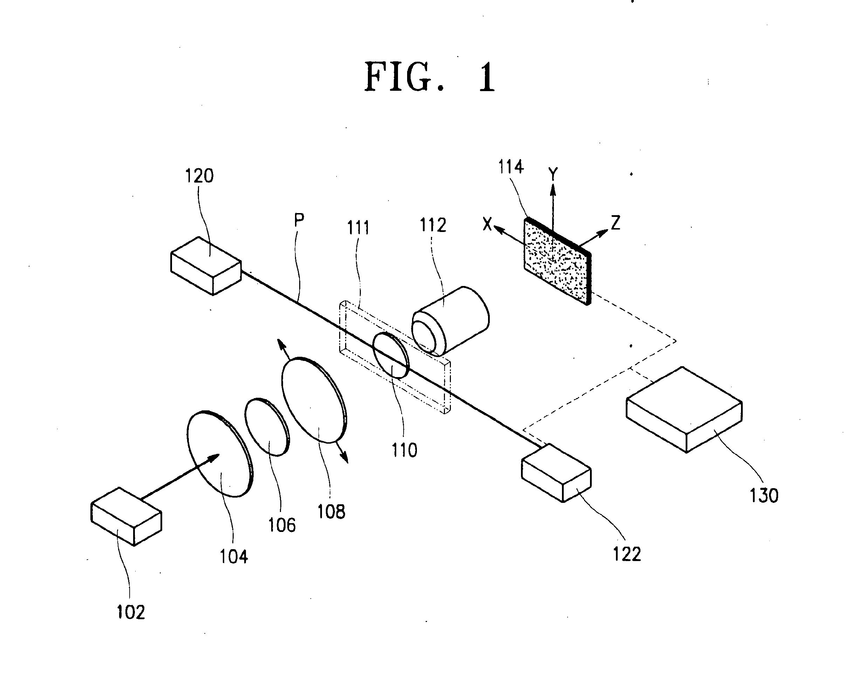

FIG. 1 is a disassembled perspective view for an apparatus for measuring the residual stress and the photoelastic effect of the optical fiber according to the embodiment of the present invention. As shown in FIG. 1, the apparatus for measuring the residual stress and the photoelastic effect of the optical fiber measures a periodical variation of the light intensity by using strains of the optical fiber. The apparatus of the present invention includes a light source 102 such as a helium neon laser or a argon-ion laser, an optical diffuser 104, an optical condenser 106, a polariscope 108, a motorized linear stage 120, a strain sensor 122, a microscope slide glass cover 111, a polarization analyzer 110, an object lens 112, and a charge coupled device(CCD) array.

As the light source 102, the helium neon laser or the argon-ion laser is used. A light radiated from the light source 102 is completely diffused and radiated through the optical diffuser 104. The reason of using the helium neon laser or the argon-ion laser as the light source 102 is to indicate each unique phase variation when the light is penetrated through the optical fiber P since the spectrum is very narrow and is regarded as a light source of a short wavelength.

The optical diffuser 104 is able to eliminate various kinds of diffraction fringe generated from a spatial coherence of the light source 102 on the image. Here, the optical diffuser 104 is installed to be rotated at high speed more than 1000rpm. The rotation of the optical diffuser in high speed can obtain an uniform image in time. The light radiated through the optical diffuser 104 is condensed into a spot where the optical fiber P is installed by the optical condenser 106. The condensed light is polarized into a linear polarization leaning at 45° from an axis of the optical fiber P by the polariscope 108 next to the optical condenser 106. That is, two light sources having the same polarized light intensity toward each of X and Y as shown in FIG. 1 from the longitudinal direction of the optical fiber P are entered on the optical fiber P, simultaneously. To reduce the polarization errors from an imbalance of the polariscope 108, it is favorable to have a small spot size where the light penetrates.

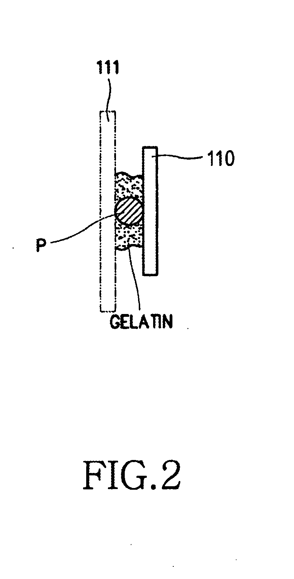

As shown in FIG. 2, the optical fiber P is installed in a space between the microscope slide glass cover 111 and the polarization analyzer 110, on which injected a material having similar refractive index with the glass such like refractive matching gelatin or glycerin. Such installation of the optical fiber P can reduce the polarization errors since the polarization analyzer 110 can be attached closely to the optical fiber P, and make a great magnified image since the optical fiber P is closed up to the object lens 112 in that degree.

As shown in FIG. 1, an end of the optical fiber P is connected to the motorized linear stage 120, and the other end is connected to the strain sensor 122. A piezo electric transducer is used as the strain sensor 122. The strain is measured by the piezo electric transducer 122 which is connected to the other end of the optical fiber P while the motorized linear stage 120 is drawing the optical fiber P slowly.

The polarization analyzer 110 is installed in right angle with the polariscope 108. Therefore, a light which doesn't penetrate the optical fiber P, i.e., the background can not be penetrated regardless a stretch of the optical fiber P by the polarization analyzer 110. The structure provides conveniences in suppressing an image distortion by a diffusion of a circumferential light, and finding an exact focus.

A distance of the optical fiber P and the object lens 112 is adjusted minutely to focus the image of the optical fiber P on the CCD array 114. At this time, the distance is adjusted to make a magnification at about 100. An essential principle of the present invention is that CCD array 114 measures the penetrated light variation by increasing strains on the optical fiber P depending on each spots of the diameter of the optical fiber P. The penetrated light is come to be a different value respectively in accordance with a radial coordinate of the optical fiber P and a rate of a strain. Therefore, the residual stress and the photoelastic effect are obtained by measuring and calculating the light penetration modulation according to a stretch of each radial coordinate.

A relation between a strain increased on the optical fiber P and a penetrability at a predetermined diameter spot has a form of $\sin^2 \phi$, wherein the $\phi$ means a phase difference of two polarized lights. The phase difference is sorted by a following equation 1.

[Equation 1]

$$\phi(y) = W(y)F + \delta_0(y)$$

In the equation 1, $\delta_0(y)$ is a phase constant distribution of the light that penetrated the optical fiber in a distance $y$ from a center of the optical fiber. $F$ is a strain, and $W(y)$ is a phase variation coefficient of the strain. Therefore, the residual stress of the optical fiber is obtained by measuring the phase constant, and the photoelastic effect by the phase variation coefficient. Here, the residual stress and the photoelastic effect have an Abel integral transformation for the phase constant and the phase variation coefficient as following second and third equations.

[Equation 2]

$$\sigma(r) = \frac{\lambda}{2\pi^2 C_1} \int_r^c \frac{d\delta(y)/dy}{\sqrt{y^2 - r^2}} dy$$

[Equation 3]

$$C_1(r) = -\frac{E}{\pi} \int_r^c \frac{dW/dy}{\sqrt{y^2 - r^2}} dy$$

Here, $\sigma(r)$ is a residual stress, $C_1(r)$ is a photoelastic constant, $E$ is a coefficient of zero, $r$ is a radial coordinate of the optical fiber, c is outer diameter of the optical fiber and $y$ is a distance of the penetrated light from the center of the optical fiber.

The object lens 112 and a CCD camera make a magnified image of the optical fiber on the CCD array 114 to magnify and measure the penetrated light. A computer 130 calculates the measured image in two dimension by synthesizing a travel of the motorized linear stage 120 and a strain value of the strain sensor 122, so as to have a three-dimensional light penetration graph like the equation 1 above. The residual stress and the photoelastic coefficient have been calculated respectively by substituting these values in the equation 2 and the equation 3 above.

As described above, the method for measuring the residual stress in the related art is disclosed in several thesis papers, but the method has low-precision, and improper to commercialize. Meanwhile, the apparatus of the present invention is expected to be more exact and practical. Further, the apparatus of the present invention is able to develop the optical fiber to have the low-loss and the high-quality as well as an improvement of the relevant technology utilizing a specific optical fiber and elements thereof.

## Claims

1. An apparatus for measuring a residual stress and a photoelastic effect of an optical fiber (P), the apparatus comprising:

   a light source (102);
   a rotary type optical diffuser (104) distanced from the light source in a predetermined distance for suppressing a spatial coherence of light radiated in the light source;
   an optical condenser (106) for condensing the radiated light passed through said optical diffuser into a spot where the optical fiber is located;
   a polariscope (108) for polarizing the light passed through said optical condenser into 45° linear polarized light from an axis of the optical fiber;
   a polarization analyzer (110) attached closely with the optical fiber, for preventing a background image to penetrate;
   an optical fiber strain unit including a strain sensor (122) for straining the optical fiber on said polarization analyzer toward a longitudinal direction and measuring the strain;
   an object lens (112) for focusing an image of the light penetrated through the optical fiber; and
   a charge coupled device, CCD, array (114) for measuring a penetration variation of the optical fiber caused from the strain by said optical fiber strain unit over the optical fiber.

2. The apparatus of claim 1, wherein the light source is a helium neon laser or an argon-ion laser.

3. The apparatus of one of the claims 1 or 2, wherein the optical fiber located on said polarization analyzer further comprises a microscope slide glass cover (111).

4. The apparatus of claim 3, wherein the optical fiber located between said polarization analyzer and the microscope slide glass cover further adds a refractive index medium which has a similar refractive index of the glass.

5. The apparatus of claim 4, wherein the refractive index medium is a refractive matching gelatin or a glycerin.

6. The apparatus of one of the claims 1 to 5, wherein said optical fiber strain unit comprises a motorized linear stage (120) fixed to an end of the optical fiber on the basis of a light condensing spot observed on the optical fiber, and said strain sensor installed in the other end of the optical fiber.

7. The apparatus of one of the claims 1 to 6, wherein said strain sensor is a piezo electric transducer.

8. The apparatus of one of the claims 1 to 7, wherein said optical diffuser rotates at high speed over 1000rpm.

9. A method for measuring a residual stress and a photoelastic effect of an optical fiber (P), the method comprising the steps of:

   varying a strain over the optical fiber toward a longitudinal direction by means of a motorized linear stage (120);
   measuring the strain by means of a strain sensor (122);
   measuring a light penetration variation of the optical fiber on each spot of the optical fiber diameter; and
   calculating an exact phase variation coefficient $W(y)$ and a phase constant $\delta o(y)$ for a given value $y$ calculated by a following first equation by using the collected light penetration variation data in the form of $\sin^2 \phi$ and the measured strain;

$$\phi(y) = W(y)F + \delta o(y)$$

   where, $\delta o(y)$ is phase constant distribution of the light passed through the optical where, $\delta o(y)$ is a phase constant distribution of the light passed through the optical fiber in a distance $y$ from the center of the optical fiber, $F$ is a strain, and $W(y)$ is a phase variation coefficient of the strain.

10. The method of claim 9, further comprising the step of calculating a residual stress σ(r) and a photoelastic coefficient constant $C_1(r)$ by an Abel integral transformation of following second and third equations with the phase variation coefficient constant W(y) and the phase constant δo(y);

$$\sigma(r) = \frac{\lambda}{2\pi^2 C_1} \int_r^c \frac{d\delta o(y)/dy}{\sqrt{y^2 - r^2}} dy$$

$$C_1(r) = -\frac{E}{\pi} \int_r^c \frac{dW/dy}{\sqrt{y^2 - r^2}} dy$$

where, σ(r) is a residual stress, $C_1(r)$ is a photoelastic constant, E is a coefficient of zero, r is a radius coordinate of the optical fiber, C is an outer diameter of the optical fiber, and y is a distance of the light passed through the optical fiber from the center of the optical fiber.

**Patentansprüche**

1. Einrichtung zum Messen einer Rest- bzw. Eigenspannung und eines fotoelastischen Effektes einer optischen Faser (P), wobei die Einrichtung umfasst:

    eine Lichtquelle (102);
    einen optischen Diffusor (104) vom Drehtyp, der von der Lichtquelle in einem vorbestimmten Abstand beabstandet ist, zum Unterdrücken einer räumlichen Kohärenz von Licht, das in der Lichtquelle abgestrahlt wird;
    einen optischen Kondensor (106) zum Kondensieren des abgestrahlten, durch den optischen Diffusor geleiteten Lichtes in einem Punkt, wo die optische Faser befindlich ist;
    ein Polariskop (108) zum Polarisieren des durch den optischen Kondensor geleiteten Lichtes in linear polarisiertes 45°-Licht bezüglich einer Achse der optischen Faser;
    einen Polarisationsanalysator (110), der nahe an der optischen Faser angebracht ist, zum Verhindern des Durchtretens eines Hintergrundbildes;
    eine einen Dehnungssensor (122) beinhaltende Dehnungseinheit der optischen Faser zum Dehnen der optischen Faser an dem Polarisationsanalysator in einer Längsrichtung und Messen der Dehnung;
    eine Objektlinse (112) zum Fokussieren eines Bildes des durch die optische Faser durchtretenden Lichtes; und
    eine CCD-Feldanordnung (Charge Coupled Device CCD, ladungsgekoppelte Vorrichtung) (114) zum Messen einer Durchtrittsvariation der optischen Faser infolge der Dehnung durch die Dehnungseinheit der optischen Faser über die optische Faser hinweg.

2. Einrichtung nach Anspruch 1, wobei die Lichtquelle ein Helium-Neon-Laser oder ein Argon-Ionen-Laser ist.

3. Einrichtung nach einem der Ansprüche 1 oder 2, wobei die optische Faser, die an dem Polarisationsanalysator befindlich ist, des Weiteren eine Mikroskopobjektträgerglasabdeckung (111) beinhaltet.

4. Einrichtung nach Anspruch 3, wobei die optische Faser, die zwischen dem Polarisationsanalysator und der Mikroskopobjektträgerglasabdeckung befindlich ist, des Weiteren ein Brechungsindexmedium hinzufügt, das einen ähnlichen Brechungsindex wie das Glas aufweist.

5. Einrichtung nach Anspruch 4, wobei das Brechungsindexmedium eine brechungstechnisch passende Gelatine oder ein solches Glycerin ist.

6. Einrichtung nach einem der Ansprüche 1 bis 5, wobei die Dehnungseinheit der optischen Faser einen motorbetriebenen Linearschlitten (120) umfasst, der an einem Ende der optischen Faser auf Basis eines an der optischen Faser beobachteten Lichtkondensationspunktes fixiert ist, wobei der Dehnungssensor in dem anderen Ende der optischen Faser installiert ist.

7. Einrichtung nach einem der Ansprüche 1 bis 6, wobei der Dehnungssensor ein piezoelektrischer Wandler ist.

8. Einrichtung nach einem der Ansprüche 1 bis 7, wobei der optische Diffusor mit hoher Geschwindigkeit über 1000 UpM rotiert.

9. Verfahren zum Messen einer Rest- bzw. Eigenspannung und eines fotoelastischen Effektes einer optischen Faser (P), wobei das Verfahren die nachfolgenden Schritte umfasst:

    Variieren einer Dehnung über die optische Faser hinweg in einer Längsrichtung mittels eines motorbetriebenen Linearschlittens (120);
    Messen der Dehnung mittels eines Dehnungssensors (122);
    Messen einer Lichtdurchtrittsvariation der optischen Faser an jedem Punkt des Durchmessers der optischen Faser; und

Berechnen eines exakten Phasenvariationskoeffizienten *W(y)* und einer Phasenkonstante δo*(y)* für einen gegebenen Wert *y* gemäß Berechnung durch eine nachfolgende erste Gleichung unter Verwendung der gesammelten Lichtdurchtrittsvariationsdaten in Form von $\sin^2 \varphi$ und der gemessenen Dehnung:

$$\varphi(y)\dot{} = W(y)F + \delta o(y)$$

wobei δo*(y)* eine Phasenkonstantenverteilung des durch die optische Faser geleiteten Lichtes in einem Abstand *y* von der Mitte der optischen Faser ist, *F* eine Dehnung ist und *W(y)* ein Phasenvariationskoeffizient der Dehnung ist.

10. Verfahren nach Anspruch 9, des Weiteren umfassend den Schritt des Berechnens einer Rest- bzw. Eigenspannung σ*(r)* und einer fotoelastischen Koeffizientenkonstante $C_1(r)$ durch eine Abel'sche Integraltransformation der nachfolgenden zweiten und dritten Gleichungen mit der Phasenvariationskoeffizientenkonstante *W(y)* und der Phasenkonstante δo*(y)*:

$$\sigma(r) = \frac{\lambda}{2\pi^2 C_1} \int_r^c \frac{d\delta o(y)/dy}{\sqrt{y^2 - r^2}} dy$$

$$C_1(r) = -\frac{E}{\pi} \int_r^c \frac{dW/dy}{\sqrt{y^2 - r^2}} dy$$

wobei σ*(r)* eine Rest- bzw. Eigenspannung ist, $C_1(r)$ eine fotoelastische Konstante ist, *E* ein Koeffizient von 0 ist, *r* eine Radiuskoordinate der optischen Faser ist, *C* ein Außendurchmesser der optischen Faser ist und *y* ein Abstand des durch die optische Faser geleiteten Lichtes von der Mitte der optischen Faser ist.

**Revendications**

1. Appareil de mesure d'une contrainte résiduelle et d'un effet photo-élastique d'une fibre optique (P), l'appareil comprenant :

une source lumineuse (102) ;
un diffuseur optique de type rotatif (104) espacé de la source lumineuse d'une distance prédéterminée pour éliminer une cohérence spatiale de la lumière irradiée dans la source lumineuse ;
un condenseur optique (106) pour condenser la lumière irradiée qui traverse ledit diffuseur optique en un point où se trouve la fibre optique ;
un polariscope (108) pour polariser la lumière qui traverse ledit condenseur optique en une lumière polarisée linéairement à 45° par rapport à un axe de la fibre optique ;
un analyseur de polarisation (110) étroitement fixé à la fibre optique pour éviter la pénétration d'une image d'arrière-plan ;
une unité de déformation de fibre optique comprenant un capteur de déformation (122) pour déformer la fibre optique sur ledit analyseur de polarisation selon une direction longitudinale et pour mesurer la déformation ;
une lentille d'objectif (112) pour focaliser une image de la lumière qui traverse la fibre optique ; et
un réseau de dispositifs à transfert de charge CCD (114), soit Charge-Coupled Device, pour mesurer une variation de pénétration de la fibre optique causée par la déformation provoquée par ladite unité de déformation de fibre optique sur la fibre optique.

2. Appareil selon la revendication 1, dans lequel la source lumineuse est un laser hélium-néon ou un laser argon-ion.

3. Appareil selon l'une des revendications 1 ou 2, dans lequel la fibre optique située sur ledit analyseur de polarisation comprend en outre une lamelle couvre-objet de microscope en verre (111).

4. Appareil selon la revendication 3, dans lequel la fibre optique située entre ledit analyseur de polarisation et la lamelle couvre-objet de microscope en verre ajoute en outre un milieu à indice de réfraction qui possède un indice de réfraction similaire à celui du verre.

5. Appareil selon la revendication 4, dans lequel le milieu à indice de réfraction est une gélatine ou une glycérine à indice de réfraction correspondant.

6. Appareil selon l'une des revendications 1 à 5, dans lequel ladite unité de déformation de fibre optique comprend un étage linéaire motorisé (120) fixé à une extrémité de la fibre optique sur base d'un point de condensation lumineuse observé sur la fibre optique, et ledit capteur de déformation installé dans l'autre extrémité de la fibre optique.

7. Appareil selon l'une des revendications 1 à 6, dans lequel ledit capteur de déformation est un transducteur piézoélectrique.

8. Appareil selon l'une des revendications 1 à 7, dans lequel ledit diffuseur optique tourne à une vitesse élevée de plus de 1.000 tr/min.

9. Procédé de mesure d'une contrainte résiduelle et d'un effet photo-élastique d'une fibre optique (P), le procédé comprenant les étapes suivantes :

   variation d'une déformation sur la fibre optique en direction longitudinale à l'aide d'un étage linéaire motorisé (120) ;
   mesure de la déformation à l'aide d'un capteur de déformation (122) ;
   mesure d'une variation de pénétration lumineuse de la fibre optique en chaque point du diamètre de la fibre optique ; et
   calcul d'un coefficient de variation de phase $W(y)$ exact et d'une constante de phase $\delta o(y)$ pour une valeur $y$ donnée selon une première équation suivante en utilisant les données de variation de pénétration lumineuse collectées sous la forme $\sin^2 \phi$ et la déformation mesurée :

$$\phi(y) = W(y)F + \delta o(y)$$

   où $\delta o(y)$ est une distribution de constante de phase de la lumière qui traverse la fibre optique sur une distance $y$ depuis le centre de la fibre optique, $F$ est une déformation, et $W(y)$ est un coefficient de variation de phase de la déformation.

10. Procédé selon la revendication 9, comprenant en outre l'étape de calcul d'une contrainte résiduelle $\sigma(r)$ et d'une constante de coefficient photo-élastique $C_1(r)$ à l'aide d'une transformation intégrale de Abel selon les deuxième et troisième équations suivantes, avec la constante de coefficient de variation de phase $W(y)$ et la constante de phase $\delta o(y)$ ;

$$\sigma(r) = \frac{\lambda}{2\pi^2 C_1} \int_r^c \frac{d\delta o(y)/dy}{\sqrt{y^2 - r^2}} dy$$

$$C_1(r) = -\frac{E}{\pi} \int_r^c \frac{dW/dy}{\sqrt{y^2 - r^2}} dy$$

où $\sigma(r)$ est une contrainte résiduelle, $C_1(r)$ est une constante photo-élastique, $E$ est un coefficient de zéro, $r$ est une coordonnée de rayon de la fibre optique, $C$ est un diamètre externe de la fibre optique, et $y$ est une distance de la lumière traversant la fibre optique depuis le centre de la fibre optique.

FIG. 1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. L. CHU ; T. WHITEBREAD.** Measurement of stresses in optical fiber and preform. *Appl. Opt.,* 1982, vol. 21, 4241-4245
- **J. R. KROPP.** Fast photoelastic stress determination application to monomode fiber and splices. *Meas. Sci. Technol.,* 1993, vol. 4, 431-434

- **K. W. RAINE.** A microscope for measuring axial stresses profile in optical fibres with high spatial resolution and low noise. *4th Optical Fibre Measurement Conference,* 1997, 269